# EUROPÄISCHE PATENTSCHRIFT

(11) **EP 2 942 338 B1**
(45) Veröffentlichungstag und Bekanntmachung des Hinweises auf die Patenterteilung: **02.10.2019**
(21) Anmeldenummer: 15175086.6
(22) Anmeldetag: 18.02.2013
(51) Int. Cl.: C04B 35/491, C04B 35/493, C04B 35/626, H01G 4/30, H01G 4/12

(54) **KONDENSATOR UMFASSEND EIN KERAMISCHES MATERIAL**
CAPACITOR COMPRISING A CERAMIC MATERIAL
CONDENSATEUR COMPRENANT UN MATÉRIAU CÉRAMIQUE

(30) Priorität: 10.04.2012 DE 102012103062; 08.05.2012 DE 102012104034
(43) Veröffentlichungstag der Anmeldung: 11.11.2015
(62) Teilanmeldung aus: 13704475.6
(73) Patentinhaber: TDK Electronics AG, 81671 München (DE)
(72) Erfinder: Engel, Günter, 8430 Leibnitz (AT); Schossmann, Michael, 8530 Deutschlandsberg (AT); Koini, Markus, 8054 Seiersberg (AT); Testino, Andrea, 5417 Untersiggenthal (CH); Hoffmann, Christian, 83075 Bad Feilnbach (DE)
(74) Vertreter: Epping - Hermann - Fischer

(56) Entgegenhaltungen:
- WO-A1-02/055450
- WO-A1-2007/138675
- WO-A1-2010/108988
- WO-A1-2011/085932
- WO-A2-01/45138
- DE-A1-102007 045 089
- GALEB H. MAHER: "Effect of Silver Doping on the Physical and Electrical Properties of PLZT Ceramics", JOURNAL OF THE AMERICAN CERAMIC SOCIETY , Bd. 66, Nr. 6 Juni 1983 (1983-06), Seiten 408-413, XP002695406, The American Ceramic Society. Cincinnati, Ohio DOI: 10.1111/j.1151-2916.1983.tb10071.x Gefunden im Internet: URL:http://onlinelibrary.wiley.com/doi/10. 1111/j.1151-2916.1983.tb10071.x/abstract [gefunden am 2013-04-12]
- RAI R ET AL: "Effect of Fe and Mn doping at B-site of PLZT ceramics on dielectric properties", JOURNAL OF ALLOYS AND COMPOUNDS, ELSEVIER SEQUOIA, LAUSANNE, CH, Bd. 487, Nr. 1-2, 13. November 2009 (2009-11-13), Seiten 494-498, XP026742297, ISSN: 0925-8388, DOI: 10.1016/J.JALLCOM.2009.07.161 [gefunden am 2009-08-05]
- H.R. RUKMINI ET AL: "Effect of doping pairs (La, Na) on structural and electrical properties of PZT ceramics", MATERIALS CHEMISTRY AND PHYSICS, Bd. 55, Nr. 2, 1. September 1998 (1998-09-01), Seiten 108-114, XP055059231, ISSN: 0254-0584, DOI: 10.1016/S0254-0584(98)00144-8

## Beschreibung

Es wird ein für Kondensatoren in Vielschichttechnologie geeignetes keramisches Material und ein Kondensator umfassend das keramische Material angegeben, der vorzugsweise für Hochleistungsanwendungen geeignet ist. Der Kondensator kann als Filterelement bei einem AC/DC- oder DC/DC-Wandler eingesetzt werden.

Keramikkondensatoren umfassen mindestens zwei elektrische Leiter, zwischen denen eine dielektrische (isolierende) keramische Schicht angeordnet ist. Die Eigenschaften von Keramikkondensatoren werden wesentlich durch die Polarisationseigenschaften des keramischen Dielektrikums bestimmt. Als pyroelektrisch bezeichnet man Materialien, die in der Abwesenheit eines elektrischen Feldes eine spontane Polarisation aufweisen. Kann die Richtung der spontanen Polarization geändert werden, indem man ein elektrisches Feld (oder eine mechanische Spannung) anlegt, heißen die Materialien ferroelektrisch. Wenn sich beim Phasenübergang aus der paraelektrischen Phase die Ionen eines Ferroelektrikums nicht parallel zueinander, sondern antiparallel zueinander verschieben, bezeichnet man das Material als antiferroelektrisch.

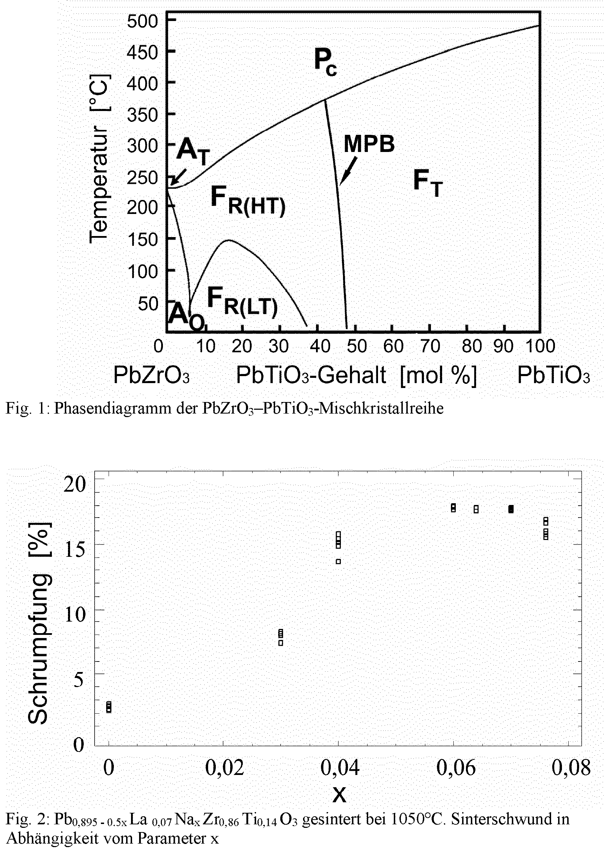

Ein bisher hauptsächlich für Piezoelemente verwendetes keramisches Material ist das Blei-Zirkonat-Titanat-System (Pb(ZrₓTi₁₋ₓ)O₃ oder PZT). Dieses stellt eine feste Lösung (lückenlose Mischkristallreihe) des antiferroelektrischen Bleizirkonats (PbZrO₃) und des ferroelektrischen Bleititanats (PbTiO₃, PTO) dar, das je nach Zusammensetzung sowohl ferroelektrische als auch antiferroelektrische Eigenschaften aufweisen kann. Das Phasendiagramm (Figur 1) zeigt, wie die Curie-Temperatur und die Kristallsymmetrie des PZT-Systems von dessen Zusammensetzung abhängen. FT und FR sind ferroelektrische tetragonale bzw. rhomboedrische Phasen. PC bezeichnet die paraelektrische, kubische Phase. AO und AT stehen für antiferroelektrische orthorhombische bzw. tetragonale Phasen. HT steht für die Hochtemperaturphase, LT steht für die Tieftemperaturphase. Ausgehend von PTO wird der Curie-Punkt bei einer Substitution von Titanionen durch Zirkoniumionen von 490 °C (Tc (PTO)) auf 230 °C (Tc (PZO)) abgesenkt; dabei ändert sich die Symmetrie von FT über FR bis zu AO (bei Zimmertemperatur). Oberhalb von Tc ist PZT paraelektrisch. Bei Unterschreitung der Curie-Temperatur findet quasi eine Verzerrung der kubischen Struktur statt, und zwar abhängig vom Zr/Ti-Verhältnis. D.h. die Ti-reichen PZT-Mischkristalle sind bei Raumtemperatur ferroelektrisch und tetragonal, im Gegensatz zu den Zr-reichen, die antiferroelektrisch-orthorhombisch (O-Phase) oder ferroelektrisch-rhomboedrisch sind. PZT-Materialien werden bisher hauptsächlich für Piezoelemente, z.B. Piezoaktoren, eingesetzt. Die hierfür benötigten piezoelektrischen Eigenschaften sind an der sogenannten morphotropen Phasengrenze ("morphotropic phase boundary"; MPB), die die beiden FE Phasen(FT und FR) trennt, besonders ausgeprägt; dabei bilden sich zwei unterschiedliche Kristallstrukturen nur nach geringfügiger Variation des Zr/Ti-Verhältnisses. Die MPB liegt zwischen PbZr_{0,6}Ti_{0,4}O₃ und PbZr_{0,55}Ti_{0,45}O₃.

WO 2011/085932 A1 offenbart einen Kondensator umfassend ein Heizelement und einen dielektrische Schichten und zwischen den dielektrischen Schichten angeordnete Innenelektroden umfassenden Kondensatorbereich, wobei das Heizelement und der Kondensatorbereich thermisch leitend miteinander verbunden sind.

WO 01/45138 A2 betrifft ein Verfahren zur Herstellung eines keramischen Vielschichtbauelements, wobei ein Grundkörper enthaltend ungesinterte Keramik und wenigstens eine metallhaltige Innenelektrode in einer Sinteratmosphäre gesintert wird, wobei in der Sinteratmosphäre als Sinterhilfsmittel ein Metall vorgesehen ist, dessen Redoxpotential wenigstens so groß ist, wie das Redoxpotential des in den Innenelektroden enthaltenen Metalls. Ferner kann das Sinterhilfsmittel ein Stoff sein, der Sauerstoff binden und wieder abgeben kann. Darüber hinaus betrifft die Druckschrift ein keramisches Vielschichtbauelement mit Innenelektroden aus Kupfer, bei dem die Innenelektroden direkt an die Keramik angrenzen. Das formelmäßig offenbarte Keramikmaterial besitzt ein Zr zu Ti Verhältnis im Bereich von 0,46 bis 0,52.

DE 102007045089 A1 Keramikmaterial nach einem der vorhergehenden Ansprüche, mit einer Zusammensetzung gemäß der folgenden Formeln: - für y ≤ x/2: a PbO + (Pb_{1-3x/2}+y□_{x/2-y}Ndₓ)((Zr_{1-z}Ti_{z})_{1-y}Ni_{y})O₃, - für y > x/2: a PbO + (_{Pb1-x}Ndₓ)((_{zr1-z}Ti_{z})_{1-y}Ni_{y})O_{3-y+x/2}◊_{y-x/2}, wobei 0 ≤ a < 1, 0 < x < 1, 0 < y < 1, 0 < z < 1 ist, a für einen Überschuss an PbO in der Einwaage steht, □ eine Pb-Leerstelle und ◊ eine O-Leerstelle darstellt, wobei 0 ≤ a ≤ 0,05, 0,0001 ≤ x ≤ 0,06, 0,0001 ≤ y ≤ 0,06 und 0,35 ≤ z ≤ 0,6 ist. Das Keramikmaterial wird insbesondere zur Herstellung von Piezoaktoren verwendet.

WO 2010/108988 A1 betrifft piezokeramische Zusammensetzungen in Form von Bleizirkonattitanaten (PZT), ein Verfahren zu deren Herstellung unter Verwendung von feinteiligen Titandioxidpartikeln und einer feinteiligen Zirkoniumverbindung sowie einer Bleiverbindung. Weiterhin betrifft die Erfindung ein piezoelektrisches Bauelement, welches ein Bleizirkonattitanat enthält.

WO 2011/085932 A1 offenbart Kondensatoren umfassend die antiferromagnetischen Keramikmaterialien Pb_{0,925}La_{0,06} (Zr_{0,86}Ti_{0,14})O₃, Pb_{0,895}La_{0,08} (Zr_{0,80}Ti_{0,20})O₃ und Pb_{0,880}La_{0,09} (Zr_{0,86}Ti_{0,20})O₃.

Eine Aufgabe von Ausführungsformen der Erfindung besteht darin, einen Kondensator in Vielschichttechnologie umfassend ein geeignetes Keramikmaterial mit verbesserten Eigenschaften bereitzustellen.

Die Aufgabe wird gelöst durch einen Kondensator in Vielschichttechnologie nach Anspruch 1. Bevorzugte Ausführungsformen werden in den abhängigen Ansprüchen dargestellt.

Erfindungsgemäß wird eine besonders Zr-reiche PZT-Mischkristallphase aus dem Phasendiagramm ausgewählt. Zudem wird durch die Bedingung e > 0 festgelegt, dass in dem erfindungsgemäßen Keramikmaterial neben einem Dotiermittel aus der im Hauptanspruch definierten Gruppe A (Seltenerdelement) mindestens ein Element aus der aus Ni, und Cu bestehenden Gruppe vorhanden sein muss. Hierdurch kann ein bei Temperaturen von 1000 °C bis 1120 °C sinterfähiges Keramikmaterial bereitgestellt werden, was eine Kombination mit anderen, bei höheren Temperaturen nicht beständigen Werkstoffen/Materialien bereits während des Herstellungsverfahrens des Keramikmaterials ermöglicht. Beispielsweise wird das Sintern des Keramikmaterials ("Co-firing"-Verfahren) mit Innenelektroden aus unedlen Metallen, wie etwa Silber oder Kupfer, möglich. Zudem besitzt das keramische Material verglichen mit dem nur durch Gruppe A dotiertem PZT-Material eine höhere Schaltfeldstärke und/oder höhere relative Permittivität (Dielektrizitätskonstante).

Zudem begünstigen niedrige Sintertemperaturen die Bildung kleiner Korngrößen des keramischen Materials, was die dielektrischen Eigenschaften günstig beeinflusst. Genauer werden die dielektrischen Eigenschaften von PZT-Keramiken im Allgemeinen auch von der Domänengröße bestimmt. Unter Domänen versteht man Bereiche in der Keramik mit gleicher Polarisation. Die Domänengröße steht in Abhängigkeit mit der Korngröße. Die Anzahl der Domänen pro Korn nimmt mit zunehmender Korngröße zu. Die veränderte Domänengröße hat Konsequenzen für die Materialeigenschaften der Keramik. Somit ist es erstrebenswert, die Korngröße beziehungsweise das Kornwachstum steuern zu können.

Typischerweise weist die erfindungsgemäße dotierte Bleizirkonat-Titanat-Keramik ein Perowskit-Gitter auf, welches sich durch die allgemeine Formel ABO₃ beschreiben lässt, wobei A für die A-Plätze und B für die B-Plätze des Perowskit-Gitters stehen.

Das Perowskit-Gitter zeichnet sich durch eine hohe Toleranz gegenüber Dotierungen und Leerstellen aus.

Die Perowskit-Struktur des Bleizirkonat-Titanats (PZT) lässt sich durch die allgemeine Formel ABO₃ beschreiben. Eine Elementarzelle des PZT-Kristallgitters lässt sich durch einen Kubus beschreiben. Die A-Plätze sind durch Pb²⁺-Ionen besetzt, welche auf den Ecken des Kubus sitzen. In der Mitte jeder Kubusfläche sitzt jeweils ein O²⁻Ion. Im Zentrum des Kubus befindet sich ein Ti⁴⁺-Ion und ein Zr⁴⁺-Ion (B-Plätze). Diese Struktur weist eine hohe Toleranz gegenüber Substitution der Metall-Ionen durch andere Metall-Ionen und Fehlstellen auf, weshalb sie sich gut dotieren lässt.

Je nach Größenunterschied zwischen dem durch Dotierung eingeführten Ion und dem ersetzten Ion kann es zur Verzerrung des hoch-symmetrischen Koordinationspolyeders kommen. Diese Verzerrung kann das Symmetriezentrum des Kristalls verändern und so die Polarisierbarkeit beeinflussen.

Die verschiedenen Möglichkeiten der Dotierung lassen sich anhand der Wertigkeit des Dotierungsions klassifizieren. Die isovalente Dotierung, also der Ersatz eines Ions durch ein anderes Ion mit gleicher Wertigkeit wirkt sich nicht auf mögliche Leerstellen im Keramikmaterial aus. Ersetzen niederwertige Kationen (Akzeptoren) Kationen mit einer höheren Wertigkeit, so werden Leerstellen im Anionen-Gitter erzeugt. Höhervalente Kationen (Donatoren) verursachen, wenn sie niederwertigere Kationen ersetzen, Leerstellen im Kationen-Gitter. Die Dotierung mit Akzeptoren und Donatoren führt jeweils zu charakteristischen Änderungen der Materialeigenschaften. Akzeptordotierte Keramiken werden auch als "harte", donordotierte Keramiken als "weiche" Keramiken bezeichnet.

Eine Dotierung, beispielsweise mit Nd³⁺ (oder einem anderen Seltenerdelement aus der Gruppe A nach dem Hauptanspruch), auf den A-Plätzen stellt eine Donator-Dotierung dar. Aufgrund des Ionenradius von Neodym wird dieses auf den Pb²⁺-Plätzen eingebaut. Der Ladungsausgleich erfolgt durch die entsprechende Bildung von Pb-Leerstellen. Die Auswirkung der Dotierung sind metrische Änderungen des Gitters und die Beeinflussung länger wirkender Wechselwirkungen zwischen den Elementarzellen.

Eine Dotierung, beispielsweise mit K⁺ oder Fe³⁺, auf den A-bzw. B-Plätzen stellt eine Akzeptor-Dotierung dar. Aufgrund des Ionenradius von Kalium wird dieses auf den Pb²⁺-Plätzen eingebaut, während Fe³⁺ auf den Zr⁴⁺ bzw. Ti⁴⁺-Plätzen eingebaut wird. Der Ladungsausgleich erfolgt durch Reduzierung von Pb²⁺-Leerstellen (A-Vakanzen) und/oder die entsprechende Bildung von Sauerstoff-Leerstellen. Die Auswirkung der Dotierung sind das Kornwachstum und die Sinterverdichtung fördernde Sauerstoff-Leerstellenbildung, die bei der Sintertemperatur durch K-Akzeptoren induziert wird. Im Prozess der Abkühlung kann eine Rekombination mit den Nd-Donatoren unter Bildung quasi neutraler {Nd/K} Defektpaare erfolgen, so dass in der fertigen Keramik keine oder eine nur sehr geringe Blei- bzw. Sauerstoff-Leerstellenkonzentration vorliegt.

Diese Dotierung wirkt sich auf das Kornwachstum des Materials aus, welches von der Konzentration der eingebrachten Dotierung abhängig ist. Kleine Dotierungsmengen tragen hierbei zum Kornwachstum bei, wohingegen zu große Mengen an Dotierungsionen das Kornwachstum hemmen können.

Die Eigenschaften von Donator-dotierten PZT-Materialien, wie sie in dem Fall vorliegen, wo Nd Pb-Plätze einnimmt, basiert im wesentlichen auf einer erhöhten Domänenbeweglichkeit, die durch die Pb-Leerstellen verursacht wird. Die Leerstellen führen dazu, dass sich die Domänen bereits von kleinen elektrischen Feldern beeinflussen lassen. Dies führt im Vergleich mit undotierten PZT-Keramiken zu einer leichteren Verschiebbarkeit der Domänengrenzen und somit zu höheren Dielektrizitätskonstanten.

In dem erfindungsgemäßen Keramikmaterial sind Akzeptor- und Donator-Dotierungen notwendigerweise gleichzeitig vorhanden. Dies führt dazu, dass die negativen Eigenschaften, welche auftreten, wenn die Keramik mit nur einer der beiden Dotierungsarten dotiert wurde, kompensiert werden. Würde beispielsweise nur eine Akzeptor-Dotierung vorliegen, so führt dies oft zu sinkenden dielektrischen Konstanten, das heißt, die Konstanten liegen unter denen der undotierten Keramik. Liegt nur eine Donator-Dotierung vor, so wird das Kornwachstum gehemmt, und die Körper der Keramik erreichen nicht die gewünschte Größe. Die erfindungsgemäß vorhandene Kombination der Dotierungen hebt sich jedoch in diesen Punkten positiv von der undotierten Keramik ab. Sie weist höhere Dielektrizitätskonstanten auf, welches auch noch bei tieferen Sintertemperaturen gegeben ist.

In einer bevorzugten erfindungsgemäßen Ausführungsform gilt 0,1 ≤ x ≤ 0,2, da in diesem Bereich die Polarisationskurven besser einstellbar sind.

In einer bevorzugten erfindungsgemäßen Ausführungsform gilt 0 ≤ y < 0,05.

In einer weiteren bevorzugten erfindungsgemäßen Ausführungsform gilt 0,001 < e < 0,12, wobei weiter bevorzugt f = 0 gilt.

In einer weiteren bevorzugten erfindungsgemäßen Ausführungsform beträgt die relative Permittivität bei einer elektrischen Feldstärke von 1 kV/mm, bevorzugt 2 kV/mm, wenigstens 60 % der relativen Permittivität bei einer elektrischen Feldstärke von 0 kV/mm. Weiter bevorzugt beträgt die relative Permittivität (Dielektrizitätskonstante) des keramischen Materials bei einer Feldstärke von 2 bis 5 kV/mm, bevorzugt1 kV/mm bis 10 kV/mm, wenigstens 60 % der relativen Permettivität bei einer elektrischen Feldstärke von 0 kV/mm. Die Messungen werden vorzugsweise bei einer Temperatur des keramischen Materials von 125°C durchgeführt.

In einer weiteren bevorzugten erfindungsgemäßen Ausführungsform besitzt das Keramikmaterial bei einer elektrischen Feldstärke von 1 kV/mm, bevorzugt 2 kV/mm eine relative Permittivität von mindestens 500, vorzugsweise mindestens 1500. Weiter bevorzugt besitzt das Keramikmaterial bei einer elektrischen Feldstärke von 2 bis 5 kV/mm, bevorzugt 1 kV/mm bis 10 kV/mm, eine relative Permittivität von mindestens 500, vorzugsweise mindestens 1500. Die Messungen werden vorzugsweise bei einer Temperatur des keramischen Materials von 125°C durchgeführt.

Die Messung der Polarisationshysterese ist eine Standardmethode zur Bestimmung der relativen Permittivität (Dielektrizitätskonstante). Zur frequenzunabhängigen Messung sind quasistatische Verfahren bekannt, bei dem die Hystereseschleife punktweise gemessen wird. Beispielsweise können Polarisationsmessungen mit Hilfe des TF Analyser 2000 der Firma aixACCT Systems GmbH durchgeführt werden.

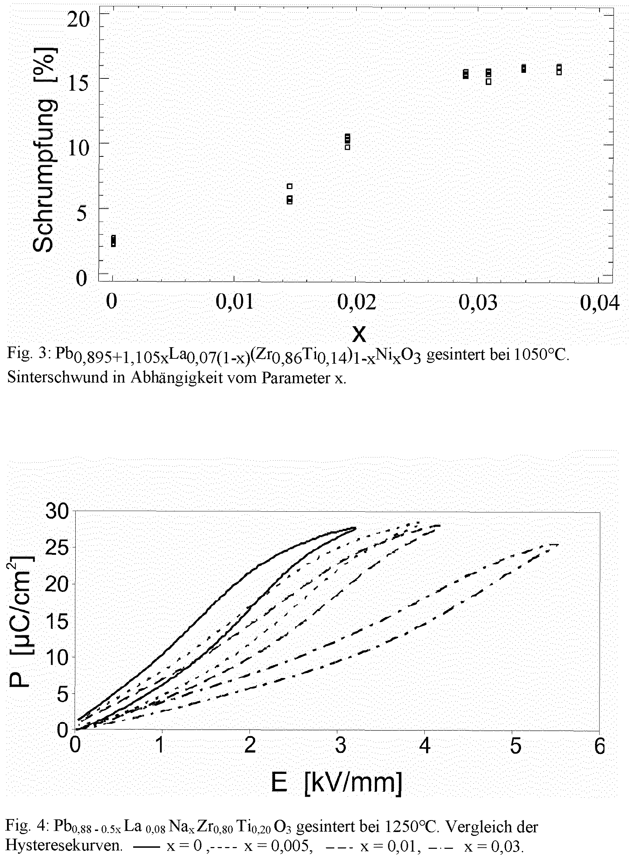

In einer weiteren bevorzugten erfindungsgemäßen Ausführungsform ist das Keramikmaterial ein antiferroelektrisches Dielektrikum. Hierzu wird das Grundmaterial PZT vorzugsweise aus dem antiferroelektrischorthorhombischen Phasengebiet (O-Phase) verwendet. Die antiferroelektrische Ordnung ist durch eine Überlagerung mehrerer polarer Teilgitter, deren elektrische Dipolmomente sich gegenseitig aufheben, gekennzeichnet. Ein antiferroelektrischer Kristall besitzt somit keine spontane Polarisation, wohl aber besondere dielektrische Eigenschaften. Legt man ein elektrisches Feld an das Antiferroelektrikum an, verhält sich es zunächst wie ein lineares Dielektrikum. Ab einer bestimmten kritischen Feldstärke wird ein sprunghafter Übergang in die ferroelektrische Phase induziert und die ehemals antiparallelen Dipole klappen in die dann energetisch günstigere, parallele, Orientierung um. Der umgekehrte Übergang findet dagegen bei einer geringeren Feldstärke statt. Dies resultiert in einer sogenannten Doppelhystereseschleife (siehe Figuren 4 bis 6, die jeweils nur die Hysteresenschleifen bei positiven Werten des elektrischen Feldes zeigen).

Antiferroelektrischen Keramikmaterialien besitzen verglichen mit ferroelektrischen Keramikmaterialien eine weniger stark ausgeprägte Polarisations-Feldstärke-Hysterese. Dies führt bei Verwendung in Kondensatoren zu geringeren energetischen Verlusten. Aus diesem Grund ist die Verwendung von antiferroelektrischen Keramikmaterialien erfindungsgemäß bevorzugt.

Zur Herstellung von reinen und verschieden dotierten Blei-Zirkonat-Titanat- (PZT-) Pulvern können das klassische Mischoxidverfahren oder auch lösungsmittelbasierte Verfahren, die auch "Sol-Gel"-Verfahren genannt werden, verwendet werden. Ausgangspunkt sind z.B. Lösungen der Acetate oder Alkoholate der konstituierenden Metalle, die über verschiedene Trocknungsverfahren in granulierte Xerogele, die keramischen Vorläufersubstanzen (Precursor), überführt werden. Zur Trocknung stehen beispielsweise das Sprühtrocknen und Sprühgefriergranulation mit anschließender Gefriertrocknung zur Verfügung. Die Precursoren werden anschließend zu den Oxiden pyrolysiert. Derartig hergestellte Pulver lassen sich mit wenig Aufwand deagglomerieren und für die weitere Prozessierung konditionieren.

Der erfindungsgemäße Kondensator umfasst mindestens eine Keramikschicht aus dem Keramikmaterial, wie vorstehend definiert, und eine leitende Elektrode, die auf der mindestens einen Keramikschicht gebildet ist.

In einer weiteren bevorzugten Ausführungsform ist die leitende Elektrode zwischen benachbarten keramischen Schichten angeordnet. Vorzugsweise ist der Kondensator ein Vielschichtkondensator, der als monolithischer Sinterkörper aus alternierenden keramischen Schichten und Elektrodenschichten gebildet ist.

In einer weiteren bevorzugten Ausführungsform umfasst die leitende Elektrode ein unedles Metall, vorzugsweise Ag oder Cu. Weiter bevorzugt umfassen die Innenelektroden Cu. Insbesondere bevorzugt bilden die unedlen Metalle den Hauptbestandteil der Innenelektroden.

Der erfindungsgemäße Kondensator besitzt eine Stromtragfähigkeit von mindestens 1 A/µF im Bereich von 80 °C bis 150 °C.

Zur Herstellung des erfindungsgemäßen Keramikkondensators wird beispielsweise aus einer Suspension des ungesinterten erfindungsgemäßen Keramikpulvers mit einem geeigneten Binder eine dünne Keramikfolie gezogen. Diese wird im Siebdruckverfahren mit einer Metallpaste, den zukünftigen Elektroden, bedruckt. Die Metallpaste kann Cu, Ag oder Pd enthalten. Vorzugsweise werden unedle Metalle, wie etwa Ag und Cu, verwendet, da so der Herstellungsprozess verbilligt wird. Die bedruckten Bögen werden in der für den Kondensator geforderten Anzahl von Lagen übereinander gestapelt und durch Pressen verfestigt. Neben der relativen Permittivität (Dielektrizitätskonstante) der Keramik bestimmt die Anzahl der Schichten übereinander und die Schichtdicke den späteren Kapazitätswert des Kondensators. Die Bedruckung und Schichtung kann erfolgen, indem die Elektroden in dem Stapel wechselweise leicht versetzt zueinander gestapelt werden, damit sie später kammartig einseitig mit den Anschlussflächen kontaktiert werden können.

Der geschichtete und gepresste Stapel wird anschließend in die einzelnen Kondensatoren zerteilt.

Nach dem Schneiden wird aus den vereinzelten Kondensatoren zunächst der Binder ausgebacken. Danach erfolgt der Brennprozess. Dabei wird das Keramikpulver bei Temperaturen zwischen 1000 und 1450 °C, vorzugsweise bei 1000 °C bis 1120 °C, gesintert und erhält seine endgültige, vorwiegend kristalline Struktur. Erst durch diesen Brennprozess erhalten die Kondensatoren ihr gewünschtes dielektrisches Verhalten. Dem Brennprozess folgt eine Reinigung und anschließend die äußere Metallisierung für die beiden Außenelektroden. Durch diese Metallisierungen an den Stirnflächen des Keramikblockes werden die inneren Elektroden parallel geschaltet. Gleichzeitig sind die Metallisierungen die äußeren elektrischen Anschlussflächen.

Im Folgenden werden die besonderen Eigenschaften des erfindungsgemäßen Keramikmaterials anhand von Figuren erläutert:
Figur 1 zeigt ein Phasendiagramm der PbZrO₃-PbTiO₃-Mischkristallreihe. FT und FR sind ferroelektrische tetragonale bzw. rhomboedrische Phasen. PC bezeichnet die paraelektrische, kubische Phase. AO und AT stehen für antiferroelektrische orthorhombische bzw. tetragonale Phasen. HT steht für Hochtemperaturphase, LT steht für Tieftemperaturphase.
Figur 2 zeigt den Sinterschwund in Abhängigkeit vom Parameter x für das Referenz-Keramikmaterial Pb_{0,895-0,5x}La_{0,07}NaₓZr_{0,86}Ti_{0,14}O₃, das bei 1050 °C gesintert wurde.
Figur 3 zeigt den Sinterschwund in Abhängigkeit vom Parameter x für das Material Pb_{0,895+1,105x}La_{0,07(1-x)}(Zr_{0,86}Ti_{0,14})₁₋ₓNiₓO₃, das bei 1050 °C gesintert wurde.
Figur 4 zeigt einen Vergleich von Hysteresekurven des Referenz-Materials Pb_{0,88-0,5x}La_{0,08}NaₓZr_{0,80}Ti_{0,20}O₃, das bei 1250 °C gesintert wurde. Die Hysteresekurven werden für x = 0, x = 0,005, x = 0,01, x = 0,03 gezeigt.
Figur 5 zeigt einen Vergleich von Hysteresekurven für das Keramikmaterial Pb_{0,895+1,105x}La_{0,07}(1-x)(Zr_{0,86}Ti_{0,14})₁₋ₓNiₓO₃, das bei 1050 °C gesintert wurde. Es werden Hysteresekurven für x = 0,04 und x = 0,05 gezeigt.
Figur 6 zeigt die Hysteresekurve eines Vielschichtkondensators mit Cu-Elektroden für das Referenz-Keramikmaterial Pb_{0,87}La_{0,07}Na_{0,05}Zr_{0,86}Ti_{0,14}O₃.
Figur 7 zeigt die relative Permittivität (Dielektrizitätskonstante) für das Referenz-Keramikmaterial Pb_{0,87}La_{0,07}Na_{0,05}Zr_{0,86}Ti_{0,14}O₃, die sich aus der Differentiation des unteren Astes der Hysteresekurve von Figur 6 ergibt.

Figuren 2 und 3 zeigen, wie der Sinterschwund durch die relative Menge (Parameter x) von Na beziehungsweise Ni gesteuert werden kann.

Für Na ergibt sich bei einer Temperatur von 1050 °C für einen Wert von x = 0,06 ein Sinterschwund von mehr als 15 %. Ein vergleichbarer Sinterschwund wird ohne Na erst bei Temperaturen von 1260 °C erreicht (Figur 2). Somit kann bei Anwesenheit von Natrium in dem Keramikmaterial bei niedrigen Temperaturen gesintert werden.

Ein ähnliches Ergebnis ergibt sich für das Sinterhilfsmittel Ni. In Figur 3 wurde das Keramikmaterial Pb_{0,895+1,105x}La_{0,07(1-x)}(Zr_{0,86}Ti_{0,14})₁₋ₓNiₓO₃ bei 1050 °C gesintert. Ein maximaler Sinterschwund von mehr als 15 % ergab sich für Werte des Parameters x von mehr als 0,03. Somit kann bei Anwesenheit von Nickel in dem Keramikmaterial bei niedrigen Temperaturen gesintert werden.

In Figur 4 wird für das Keramikmaterial Pb_{0,88-0,5x}La_{0,08}NaₓZr_{0,80}Ti_{0,20}O₃, das bei 1250 °C gesintert wurde, der Einfluss des Parameters x auf die Polarisierbarkeit und die Schaltfeldstärke gezeigt. Mit größeren Werten für x, das heißt einem größeren Anteil an Na in dem keramischen Material, ergibt sich eine geringere Polarisierbarkeit und eine Erhöhung der Schaltfeldstärke, was sich in einer Abflachung der Hystereseschleifen zeigt.

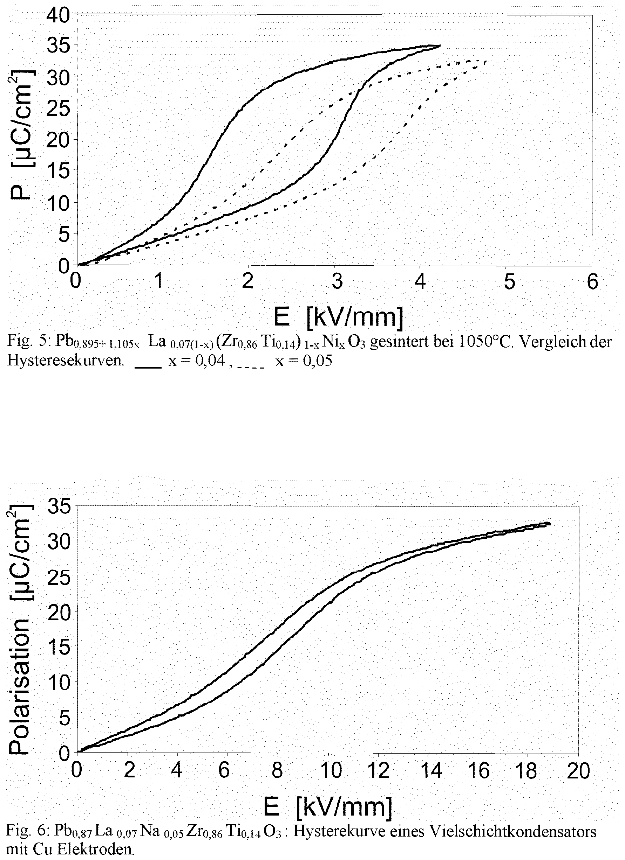

Ein ähnliches Ergebnis ergibt sich in Figur 5 für das keramische Material Pb_{0,895+1,105x}La_{0,07(1-x)}(Zr_{0,86}Ti_{0,14})₁₋ₓNiₓO₃, das bei 1050 °C gesintert wurde. Hier zeigt der Vergleich für den Parameter x mit 0,04 beziehungsweise 0,05, dass bei einer Erhöhung des Anteils an Ni in dem keramischen Material die Polarisierbarkeit abnimmt und die Schaltfeldstärke zunimmt.

In Figur 6 wird eine Hysteresekurve für einen Vielschichtkondensator mit Cu-Elektroden gezeigt, der das keramische Referenz-Material Pb_{0,87}La_{0,07}Na_{0,05}Zr_{0,86}Ti_{0,14}O₃ umfasst. Das keramische Material zeigt eine hohe Schaltfeldstärke von ca. 8 kV/mm. Die hohe Schaltfeldstärke ermöglicht es, relativ viel Energie im Kondensator zu speichern. Zudem besitzt das keramische Material eine gering ausgeprägte Polarisations-Feldstärke-Hysterese, wodurch der Kondensator nur geringe energetische Verluste aufweist.

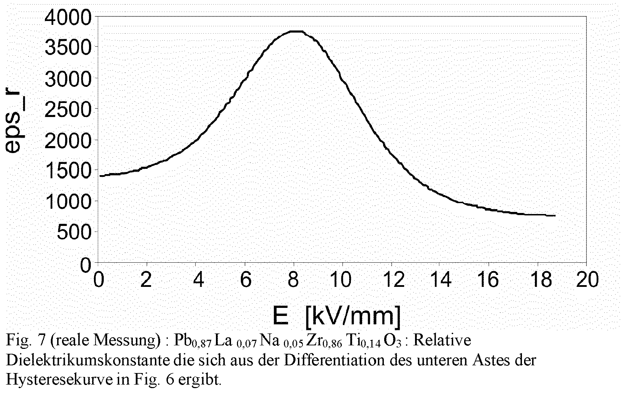

In Figur 7 wird die relative Permittivität (Dielektrikumskonstante), die sich aus der Differentiation des unteren Astes der Hysteresekurve von Figur 6 ergibt, gezeigt. Es ergibt sich ein für ein antiferroelektrisches Material charakteristischer Verlauf. Die relative Permittivität erreicht bei ca. 8 kV/mm ein Maximum von 3800. Dieses Maximum entspricht der Schaltfeldstärke.

## Patentansprüche

1. Kondensator umfassend
- mindestens eine Keramikschicht aus einem Keramikmaterial für Kondensatoren in Vielschichttechnologie der allgemeinen Formel:
(I) Pb_{(1-1,5a+e)}Aₐ (Zr₁₋ₓTiₓ)_{1-c-e}CₑSi_{c}O₃ + y·PbO
wobei
A aus der Gruppe ausgewählt ist, die aus La, Nd, Y, Eu, Gd, Tb, Dy, Ho, Er und Yb besteht;
C aus der Gruppe ausgewählt ist, die aus Ni, und Cu besteht; und
0 < a < 0,12
0,05 ≤ x ≤ 0,3
0 ≤ c < 0,12
0,001 < e < 0,12
0 ≤ y < 1, und
- eine leitende Elektrode, die auf der mindestens einen Keramikschicht gebildet ist, wobei die Anzahl und Dicke der mindestens einen Keramikschicht so eingestellt ist, dass Stromtragfähigkeit mindestens 1 A/µF im Bereich von 80 °C bis 150 °C beträgt.

2. Kondensator nach Anspruch 1, worin die leitende Elektrode zwischen benachbarten keramischen Schichten angeordnet ist.

3. Kondensator nach einem der Ansprüche 1 oder 2, worin die leitende Elektrode ein unedles Metall, vorzugsweise Ag oder Cu, umfasst.

## Claims

1. Capacitor comprising
- at least one ceramic layer of a ceramic material for capacitors in multilayer technology of the general formula:
(I) Pb_{(1-1.5a+e)}Aₐ (2r₁₋ₓTiₓ)_{1-c-e}CₑSi_{c}O₃ + y·PbO
where
A is selected from the group consisting of La, Nd, Y, Eu, Gd, Tb, Dy, Ho, Er and Yb,
C is selected from the group consisting of Ni and Cu; and
0 < a < 0.12
0.05 ≤ x ≤ 0.3
0 ≤ c < 0.12
0.001 < e < 0.12
0 ≤ y < 1, and
- a conductive electrode formed on the at least one ceramic layer, where the number and thickness of the at least one ceramic layer is adjusted such that current load capacity is at least 1 A/µF in the range from 80°C to 150°C.

2. Capacitor according to Claim 1, wherein the conductive electrode is disposed between adjacent ceramic layers.

3. Capacitor according to either of Claims 1 and 2, in which the conductive electrode comprises a base metal, preferably Ag or Cu.

## Revendications

1. Condensateur, comprenant :
- au moins une couche céramique en un matériau céramique pour condensateurs dans la technologie multicouche, de la formule générale :
**(I)** **Pb_{(1-1,5a+e)}Aₐ (Zr₁₋ₓTiₓ)_{1-c-e}CₑSi_{c}O₃ + y·PbO**
dans laquelle
A est choisi dans le groupe constitué par La, Nd, Y, Eu, Gd, Tb, Dy, Ho, Er et Yb ;
C est choisi dans le groupe constitué par Ni et Cu ; et
0 < a < 0,12,
0,05 ≤ x ≤ 0,3,
0 ≤ c < 0,12,
0,001 < e < 0,12,
0 ≤ y < 1, et
- une électrode conductrice, qui est formée sur ladite au moins une couche céramique, le nombre et l'épaisseur de ladite au moins une couche céramique étant ajustés de telle sorte que la capacité de courant soit d'au moins 1 A/µF dans la plage allant de 80 °C à 150 °C.

2. Condensateur selon la revendication 1, dans lequel l'électrode conductrice est agencée entre des couches céramiques voisines.

3. Condensateur selon l'une quelconque des revendications 1 ou 2, dans lequel l'électrode conductrice comprend un métal commun, de préférence Ag ou Cu.
